(19) Europäisches Patentamt
European Patent Office
Office européen des brevets

(11) **EP 4 672 378 A1**

(12) **EUROPEAN PATENT APPLICATION**
published in accordance with Art. 153(4) EPC

(43) Date of publication:
**31.12.2025  Bulletin 2026/01**

(21) Application number: **23924583.0**

(22) Date of filing: **28.02.2023**

(51) International Patent Classification (IPC):
**H01M 4/587** (2010.01)    **H01M 10/0525** (2010.01)
**C01B 32/20** (2017.01)

(52) Cooperative Patent Classification (CPC):
**H01M 4/587; C01B 32/20; H01M 4/133;**
**H01M 10/0525;** H01M 2004/021

(86) International application number:
**PCT/CN2023/078734**

(87) International publication number:
**WO 2024/178611 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Ningde Amperex Technology Limited**
**Zhangwan Town, Jiaocheng Zone**
**Ningde City**
**Fujian 352100 (CN)**

(72) Inventors:
• JIN, Wenbo
  Ningde, Fujian 352100 (CN)
• DONG, Jiali
  Ningde, Fujian 352100 (CN)

(74) Representative: **Icosa**
**83 avenue Denfert-Rochereau**
**75014 Paris (FR)**

(54) **NEGATIVE ELECTRODE ACTIVE MATERIAL, SECONDARY BATTERY, AND ELECTRONIC DEVICE**

(57)    A negative electrode active material is provided. The negative electrode active material includes a carbon-based material, where a surface of the carbon-based material includes element sodium and element oxygen. An atomic percentage of the element sodium is X, and an atomic percentage of the element oxygen is Y, where $Y/X \geq 3.0$. X and Y are obtained through testing using an X-ray energy dispersive spectrometer. In this application, amounts of element sodium and element oxygen on the surface of the carbon-based material are controlled to be within given ranges, so that quality of SEI films can be effectively improved, thereby allowing a secondary battery to have excellent cycling performance. A secondary battery including the negative electrode active material is further provided.

FIG. 1

## Description

### TECHNICAL FIELD

This application relates to the field of energy storage, and specifically, to a negative electrode active material, a secondary battery, and an electronic apparatus.

### BACKGROUND

With continuous expansion of the secondary battery market, requirements for performance of secondary batteries are constantly increasing, in which cycling performance is an important indicator, and especially, extremely high requirements are imposed on cycling performance for electric vehicles, energy storage apparatuses, and the like. With consideration of actual working environments and working characteristics, cycling performance is crucial for service life of electric vehicles and energy storage apparatuses. To meet market requirements, it is necessary to develop a negative electrode active substance having excellent cycling performance and a negative electrode plate composed of such substance, so as to improve cycling performance of a secondary battery. In the prior art, methods of improving cycling performance mainly include reducing a particle size of an active substance and applying amorphous carbon on a surface of an active substance. However, these two methods not only cause great loss of energy density of a negative electrode active substance, but also reduce efficiency of a secondary battery.

### SUMMARY

In view of the foregoing problems existing in the prior art, this application provides a negative electrode active material and a secondary battery including the negative electrode active material, so as to improve quality of an SEI film on a surface of a carbon-based material, thereby improving cycling performance of the secondary battery.

According to a first aspect, this application provides a negative electrode active material. The negative electrode active material includes a carbon-based material, where a surface of the carbon-based material includes element sodium and element oxygen, an atomic percentage of the element sodium being X, an atomic percentage of the element oxygen being Y, and $Y/X \geq 3.0$, where X and Y are obtained through testing using an X-ray energy dispersive spectrometer. Specifically, X and Y are tested using the following test method: In a case that the carbon-based material is observed using a scanning electron microscope, any $100\ \mu m \times 100\ \mu m$ region in a field of vision of the scanning electron microscope is selected, and amounts of the element sodium and element oxygen in this region are tested through surface scanning using an X-ray energy dispersive spectrometer (EDS) to obtain X and Y. In this application, the surface of the carbon-based material has element sodium and element oxygen. When the carbon-based material is used as a negative electrode active material, the element sodium and the element oxygen are constituent elements of an SEI film and affect thermal stability of the SEI film on the surfaces of particles, and the amounts of these two elements have certain interaction on the thermal stability of the SEI. The element sodium contributes to formation of the SEI film on the surface of carbon-based material, and can effectively improve quality of the SEI film, thereby improving cycling performance of a secondary battery. However, excessive amounts of element sodium make the SEI film excessively thick, which is not conducive to improvement of the cycling performance. Element oxygen is an essential constituent of the SEI film. However, when its amount is excessively high, side reactions increase, which in turn affects the storage performance and cycling performance of the secondary battery. In this application, the amounts of element sodium and element oxygen are controlled to be within the foregoing ranges, so that the quality of the SEI film can be effectively improved, thereby allowing the secondary battery to have excellent cycling performance. In some embodiments, $3.5 \leq Y/X \leq 15$.

In some embodiments, $0.2\% \leq X \leq 4.0\%$. In some embodiments, a mass percentage of the element sodium is m, where $0.4\% \leq m \leq 9.0\%$. In this application, m is tested using the following test method: The carbon-based material is observed using a scanning electron microscope, any $100\ \mu m \times 100\ \mu m$ region in a field of vision of the scanning electron microscope is selected, and the amount of the element sodium in this region is tested through EDS surface scanning to obtain m. Element sodium is mainly used to construct an inorganic constituent of the SEI film. Therefore, a mass percentage of element sodium should not be excessively small. However, when the amount of element sodium is excessively large, an amount of an organic constituent in the SEI film is affected, causing the amount of the organic constituent to decrease. This increases brittleness and decreases elasticity of the SEI film, which in turn makes the SEI film prone to breakage due to swelling of the carbon-based material during cycling, thereby affecting the cycling performance of the secondary battery. In some embodiments, $3\% \leq m \leq 6\%$. In some embodiments, $0.3\% \leq X \leq 2.5\%$.

In some embodiments, $2.0\% \leq Y \leq 15.0\%$. Element oxygen is an essential constituent of the SEI film. However, when its amount is excessively high, side reactions increase, which in turn affects the storage performance and cycling performance of the secondary battery. In some embodiments, $3.0\% \leq Y \leq 12.0\%$.

In some embodiments, the carbon-based material satisfies $BET/(Y \times 100) \leq 0.7$, where BET $m^2/g$ represents a

specific surface area of the carbon-based material. The specific surface area of the carbon-based material is affected by the amount of the element oxygen on its surface. If BET is excessively large, side reactions during cycling of the secondary battery increase, affecting the cycling performance. In this application, BET and the amount of element oxygen satisfy a relation: $BET/(Y \times 100) \leq 0.7$, which can keep relatively small BET while ensuring a relatively large amount of element oxygen. In some embodiments, $0.2 \leq BET/(Y \times 100) \leq 0.6$.

In some embodiments, the carbon-based material satisfies $25 \leq D_v99 - D_v10 \leq 55$, where $D_v99$ represents a particle size of the carbon-based material at the 99th percentile of the cumulative volume distribution, in $\mu m$; and $D_v10$ represents a particle size of the carbon-based material at the 10th percentile of the cumulative volume distribution, in $\mu m$. The value of $D_v99 - D_v10$ is related to particle size distribution of the carbon-based material. When $D_v99 - D_v10$ is within the foregoing range, relatively narrow particle distribution can be guaranteed, and excessive small particles and large particles are less likely to occur, which is in turn conducive to improving the cycling performance and processing performance of the secondary battery. When excessive small particles are present in the carbon-based material, side reactions increase, affecting the cycling performance of the secondary battery. When excessive large particles are present, the processing performance is affected, which may lead to an appearance defect such as bumps on a negative electrode plate, and may even lead to slight spotted lithium precipitation. In some embodiments, $30 \leq D_v99 - D_v10 \leq 40$.

In some embodiments, a weight loss rate of the carbon-based material is 0.2% to 5% within a temperature range of 25°C to 400°C in a thermogravimetry test. A weight loss rate of the carbon-based material at 400°C can represent an amount of a surface modification substance on the carbon-based material, and the amount of the surface modification substance further affects formation quality of the SEI film in a subsequent formation process. When the weight loss rate is excessively low, that is, the amount of the modification substance is excessively low, the thermal stability of the SEI film cannot be improved. In some embodiments, the weight loss rate of the carbon-based material is 0.5% to 2.5% within the temperature range of 25°C to 400°C in the thermogravimetry test.

In some embodiments, a powder compacted density PD at 5t of the carbon-based material satisfies 1.5 $g/cm^3 \leq PD \leq 2.5$ $g/cm^3$. A compacted density of the carbon-based material when used as a negative electrode active material is related to energy density and kinetics of a secondary battery. When the compacted density is relatively low, a compacted density of an electrode plate is also relatively low, and the energy density of a secondary battery decreases accordingly. When the compacted density is excessively high, the kinetic performance of the secondary battery is reduced, affecting its electrical performance at a high rate. In some embodiments, 1.65 $g/cm^3 \leq PD \leq 1.95$ $g/cm^3$.

In some embodiments, an OI value of the carbon-based material is 5 to 18. The OI value of the carbon-based material indicates orientation index consistency of crystals in its particles. When the OI value is relatively large, the orientation index consistency of the crystals is high, and deintercalation and intercalation directions of lithium ions in active particles are relatively the same. This leads to difficulty in lithium deintercalation and intercalation, and even leads to lithium precipitation, thereby reducing the cycling performance of the secondary battery. In some embodiments, the orientation index OI value of the carbon-based material is 6 to 13.

In some embodiments, the carbon-based material includes graphite. In some embodiments, the graphite includes one or more selected from a group consisting of natural graphite and artificial graphite.

In some embodiments, a preparation method of the carbon-based material includes the following steps:

    S1, providing a graphite composite material;
    S2, mixing the graphite composite material with an oxidant and then performing oxidation treatment to obtain an oxidized graphite composite material; and
    S3, mixing the oxidized graphite composite material with an oxygen-containing sodium salt to obtain the carbon-based material.

In some embodiments, in S2, the oxidant is a nitric acid ($HNO_3$) solution. In some embodiments, the concentration of the nitric acid solution is 2 mol/L to 5 mol/L.

In some embodiments, in S3, the oxygen-containing sodium salt is selected from at least one of an inorganic sodium salt containing element oxygen or an organic sodium salt containing element oxygen. In some embodiments, the oxygen-containing sodium salt includes a carbon element. In some embodiments, the oxygen-containing sodium salt is selected from at least one of sodium carbonate, sodium bicarbonate, or sodium polyacrylate.

In some embodiments, the providing a graphite composite material includes the following steps:

    S1, pulverizing the graphite raw material, for example, pulverizing until $D_v50$ is 9 $\mu m$ to 11 $\mu m$;
    S2, performing pre-carbonization treatment on the pulverized raw material;
    S3, mixing the pre-carbonized product with asphalt and performing granulation; and
    S4, performing graphitization treatment on the granulated product to obtain the graphite composite material.

In some embodiments, a preparation method of the carbon-based material includes: pulverizing an artificial graphite raw material, performing pre-carbonization treatment on the pulverized raw material, adding asphalt for granulation after the treatment is completed, and performing high-temperature graphitization treatment after the granulation is completed to obtain a graphite composite material; and performing surface modification treatment (specifically including performing oxidation treatment first, and then mixing and performing ball milling treatment on the oxidized graphite composite material and the oxygen-containing sodium salt) on the graphite composite material to obtain the carbon-based material.

According to a second aspect, this application provides a secondary battery. The secondary battery includes a negative electrode plate, and the negative electrode plate includes a negative electrode active material layer, where the negative electrode active material layer includes the negative electrode active material of the first aspect.

In some embodiments, a compacted density CD of the negative electrode plate satisfies 1.3 g/cm$^3 \leq$CD$\leq$1.8 g/cm$^3$. The compacted density of the negative electrode plate affects the energy density and kinetic performance of the secondary battery. When the compacted density of the negative electrode plate is excessively low, the energy density of the secondary battery is relatively low, and adhesion of negative electrode active material particles on a negative electrode current collector becomes poor, which may cause detachment of the negative electrode active material, thereby reducing the cycling performance of the secondary battery. When the compacted density of the negative electrode plate is excessively high, infiltration of an electrolyte on the negative electrode plate obviously decreases, and the kinetic performance of the secondary battery is also reduced. In this case, lithium precipitation is likely to occur in the secondary battery during cycling, thereby reducing its cycling performance. In some embodiments, 1.45 g/cm$^3 \leq$CD$\leq$1.75 g/cm$^3$.

In some embodiments, the OI value of the negative electrode plate is 5 to 20. The OI value of the negative electrode plate represents an arrangement orientation index of the negative electrode active material particles on the negative electrode plate. When the OI value of the negative electrode plate is excessively small, the negative electrode active material particles are arranged in disorder on a surface of the negative electrode current collector, and the orientation index is not obvious, which easily causes a situation such as the detachment of the negative electrode active material. When the OI value of the negative electrode plate is excessively large, the negative electrode active material particles are arranged in order on the negative electrode current collector, and the orientation index is high. However, this affects deintercalation and intercalation of lithium ions, thereby affecting the rate performance of the secondary battery. In some embodiments, the OI value of the negative electrode plate is 7 to 18.

In some embodiments, Id/Ig of the negative electrode plate satisfies 0.1$\leq$Id/Ig$\leq$0.6, where Id represents intensity of a peak at 1350 cm$^{-1}$ of the negative electrode plate in the Raman spectrum, and Ig represents intensity of a peak at 1580 cm$^{-1}$ of the negative electrode plate in the Raman spectrum. A value of Id/Ig indicates a defect level of the negative electrode plate. When Id/Ig is excessively large, the defect degree of the negative electrode plate is excessively high, which increases side reactions, affecting the cycling performance of the secondary battery. When Id/Ig is excessively small, the defect degree of the negative electrode plate is low, which is not conducive to the kinetic performance of the secondary battery. In some embodiments, 0.2$\leq$Id/Ig$\leq$0.5.

In some embodiments, a capacity retention rate of the secondary battery is $\geq$90% after 300 cycles at a high temperature of 45°C.

According to a third aspect, this application provides an electronic apparatus. The electronic apparatus includes the secondary battery of the second aspect.

In this application, amounts of element sodium and element oxygen on a surface of a carbon-based material are controlled to be within given ranges, so that quality of SEI films can be effectively improved, thereby allowing a secondary battery to have excellent cycling performance.

**BRIEF DESCRIPTION OF DRAWINGS**

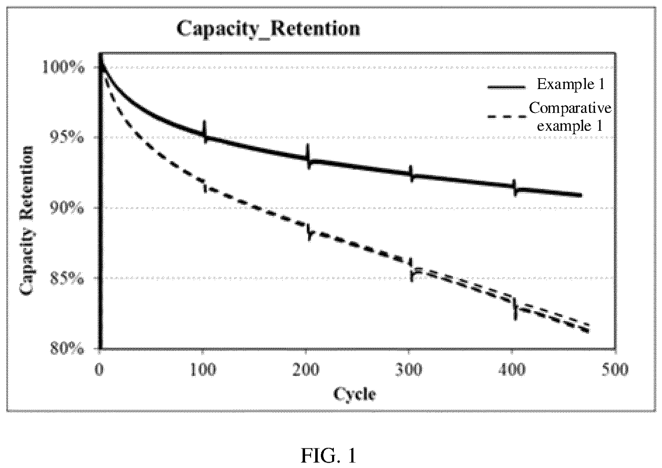

FIG. 1 shows cycling performance of lithium-ion batteries of Example 1 and Comparative Example 1.

**DESCRIPTION OF EMBODIMENTS**

Some embodiments of this application are described in detail below. Some embodiments of this application should not be construed as a limitation on this application.

In addition, amounts, ratios, and other numerical values are sometimes presented in a range formats in this application. It should be understood that such range formats are used for convenience and simplicity and should be flexibly understood as including not only values clearly designated as falling within the range but also all individual values or sub-ranges covered by the range as if each value and sub-range are clearly designated.

In the detailed description and claims, the list of items connected by "at least one of", "at least one piece of", "at least one type of", or another similar term may mean any combination of the listed items. For example, if items A and B are listed, the phrase "at least one of A or B" means only A; only B; or A and B. In another example, if items A, B, and C are listed, the phrase "at least one of A, B, or C" means only A; only B; only C; A and B (exclusive of C); A and C (exclusive of B); B and C (exclusive of A); or all of A, B, and C. The item A may include a single element or a plurality of elements. The item B may include a single element or a plurality of elements The item C may include a single element or a plurality of elements.

I. Negative electrode active material

A negative electrode active material provided in this application includes a carbon-based material. A surface of the carbon-based material has element sodium and element oxygen. An atomic percentage of the element sodium is X, and an atomic percentage of the element oxygen is Y, where Y/X≥3.0. X and Y are obtained through testing using an X-ray energy dispersive spectrometer. Specifically, X and Y are tested using the following test method: In a case that the carbon-based material is observed using a scanning electron microscope, any 100 $\mu$m×100 $\mu$m region in a field of vision of the scanning electron microscope is selected, and amounts of the element sodium and element oxygen in this region are tested through EDS surface scanning to obtain X and Y. In this application, the surface of the carbon-based material has the element sodium and the element oxygen. The element sodium and the element oxygen are constituent elements of an SEI film, which affects thermal stability of the SEI film on the surfaces of particles, and these two elements have certain interaction. The element sodium contributes to formation of the SEI film on the surface of carbon-based material, which can effectively improve quality of the SEI film. When the carbon-based material is used as a negative electrode active material of a secondary battery, the cycling performance of the secondary battery can be improved. However, excessive amounts of element sodium make the SEI film excessively thick, which is not conducive to improvement of the cycling performance. Element oxygen is an essential constituent of the SEI film. However, when its amount is excessively high, side reactions increase, which in turn affects the storage performance and cycling performance of the secondary battery. In this application, the amounts of element sodium and element oxygen are controlled to be within the foregoing ranges, so that the quality of the SEI film can be effectively improved, thereby allowing the secondary battery to have excellent cycling performance. In some embodiments, 3≤Y/X≤20. In some embodiments, Y/X is 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, or 19.5, or within a range defined by any two values thereof.

In some embodiments, 0.2%≤X≤4.0%. Controlling the amount of element sodium to be within the foregoing range can effectively improve the quality of the SEI film, thereby improving the cycling performance of the secondary battery. In some embodiments, X is 0.2%, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, 3.1%, 3.3%, 3.5%, 3.7%, 3.9%, 4.0%, or any value within a range defined by any two values thereof. In some embodiments, 0.3%≤X≤2.5%.

In some embodiments, a mass percentage of the element sodium is m, where 0.4%≤m≤9%. In this application, m is tested using the following test method: In a case that the carbon-based material is observed using a scanning electron microscope, any 100 $\mu$m×100 $\mu$m region in a field of vision of the scanning electron microscope is selected, and the amount of the element sodium in this region is tested through EDS surface scanning to obtain m. In some embodiments, m is 0.5%, 1.0%, 1.5%, 2.0%, 2.5%, 3.0%, 3.5%, 4.0%, 4.5%, 5.0%, 5.5%, 6.0%, 6.5%, 7.0%, 7.5%, 8.0%, 8.5%, or any value within a range defined by any two values thereof. Element sodium is mainly used to construct an inorganic constituent of the SEI film. Therefore, a mass percentage of element sodium should not be excessively small. However, when the amount of element sodium is excessively large, an amount of an organic constituent in the SEI film is affected, causing the amount of the organic constituent to decrease. This increases brittleness and decreases elasticity of the SEI film, which in turn makes the SEI film prone to breakage due to swelling of the carbon-based material during cycling, thereby affecting the cycling performance of the secondary battery. In some embodiments, 3%≤m≤6%.

In some embodiments, 2.0%≤Y≤15.0%. In some embodiments, Y is 2.5%, 3%, 3.5%, 4%, 4.5%, 5%, 5.5%, 6%, 6.5%, 7%, 7.5%, 8%, 8.5%, 9%, 9.5%, 10%, 10.5%, 11%, 11.5%, 12%, 12.5%, 13%, 14%, 15%, or any value within a range defined by any two values thereof. Element oxygen is an essential constituent of the SEI film. However, when its amount is excessively high, side reactions increase, which in turn affects the storage performance and cycling performance of the secondary battery. In some embodiments, 3.0%≤Y≤12.0%.

In some embodiments, the carbon-based material satisfies BET/(Y×100)≤0.7, where BET m$^2$/g represents a specific surface area of the carbon-based material. The specific surface area of the carbon-based material is affected by the amount of the element oxygen on its surface. If BET is excessively large, side reactions during cycling of the secondary battery increase, affecting the cycling performance. In this application, BET and the amount of element oxygen satisfy a relation: BET/(Y×100)≤0.7, which can keep relatively small BET while ensuring a relatively large amount of element oxygen. In some embodiments, BET/(Y×100) is 0.05, 0.1, 0.15, 0.2, 0.25, 0.3, 0.35, 0.4, 0.45, 0.5, 0.55, 0.6, 0.65, or any value within a range defined by any two values thereof. In some embodiments, BET/(Y×100)≤0.6.

In some embodiments, the specific surface area BET of the carbon-based material is 1 to 10, in m$^2$/g. In some embodiments, BET is 1.5, 2, 2.5, 3, 3.5, 4, 4.5, 5, 5.5, 6, 6.5, 7, 7.5, 8, 8.5, 9, or 9.5, or within a range defined by any two values thereof. If BET of the carbon-based material is excessively large, side reactions during the cycling of the secondary battery increase, thereby reducing the cycling performance.

In some embodiments, the carbon-based material satisfies 25≤$D_v$99-$D_v$10≤55, where $D_v$99 represents a particle

size of the carbon-based material at the 99th percentile of the cumulative volume distribution, in $\mu$m; and $D_v10$ represents a particle size of the carbon-based material at the 10th percentile of the cumulative volume distribution, in $\mu$m. The value of $D_v99-D_v10$ is related to particle size distribution of the carbon-based material. When $D_v99-D_v10$ is within the foregoing range, relatively narrow particle distribution can be guaranteed, and excessive small particles and large particles are less likely to occur, which is in turn conducive to improving the cycling performance and processing performance of the secondary battery. When excessive small particles are present in the carbon-based material, side reactions increase, affecting the cycling performance of the secondary battery. When excessive large particles are present, the processing performance is affected, which may lead to an appearance defect such as bumps on a negative electrode plate, and may even lead to slight spotted lithium precipitation. In some embodiments, $D_v99-D_v10$ is 27, 30, 33, 35, 37, 40, 43, 45, 47, 50, 53, or any value within a range defined by any two values thereof. In some embodiments, $30 \leq D_v99-D_v10 \leq 40$.

In some embodiments, $D_v99$ of the carbon-based material is 20 to 60, in $\mu$m. In some embodiments, $D_v99$ of the carbon-based material is 22, 24, 26, 28, 30, 32, 34, 36, 38, 40, 42, 44, 46, 48, 50, 52, 54, 56, 58, or any value within a range defined by any two values thereof. In some embodiments, $D_v10$ of the carbon-based material is 1 to 10, in $\mu$m. In some embodiments, $D_v10$ of the carbon-based material is 1.5, 2, 2.5, 3, 3.5, 4, 4.5, 5, 5.5, 6, 6.5, 7, 7.5, 8, 8.5, 9, 9.5, or any value within a range defined by any two values thereof.

In some embodiments, a weight loss rate of the carbon-based material is 0.2% to 5% within a temperature range of 25°C to 400°C in a thermogravimetry test. A weight loss rate of the carbon-based material at 400°C can represent an amount of a surface modification substance on the carbon-based material, and the amount of the surface modification substance further affects formation quality of the SEI film in a subsequent formation process. When the weight loss rate is excessively low, that is, the amount of the modification substance is excessively low, the thermal stability of the SEI film cannot be improved. In some embodiments, within the temperature range of 25°C to 400°C in the thermogravimetry test, the weight loss rate of the carbon-based material is 0.2% to 3.0%, for example, 0.3%, 0.4%, 0.5%, 0.6%, 0.7%, 0.8%, 0.9%, 1.0%, 1.1%, 1.2%, 1.3%, 1.4%, 1.5%, 1.6%, 1.7%, 1.8%, 1.9%, 2.0%, 2.1%, 2.2%, 2.3%, 2.4%, 2.5%, 2.6%, 2.7%, 2.8%, 2.9%, or any value within a range defined by any two values thereof. In some embodiments, the weight loss rate of the carbon-based material is 0.5% to 2.5% within the temperature range of 25°C to 400°C in the thermogravimetry test.

In some embodiments, a powder compacted density PD at 5t of the carbon-based material satisfies 1.5 g/cm$^3 \leq$PD$\leq$2.5 g/cm$^3$. A compacted density of the carbon-based material when used as a negative electrode active material is related to energy density and kinetics of a secondary battery. When the compacted density of the carbon-based material is relatively low, a compacted density of an electrode plate is also relatively low, and the energy density of a secondary battery decreases accordingly. When the compacted density of the carbon-based material is excessively high, the kinetic performance of the secondary battery is reduced, affecting its electrical performance at a high rate. In some embodiments, PD is 1.5 g/cm$^3$, 1.55 g/cm$^3$, 1.6 g/cm$^3$, 1.65 g/cm$^3$, 1.7 g/cm$^3$, 1.75 g/cm$^3$, 1.8 g/cm$^3$, 1.85 g/cm$^3$, 1.9 g/cm$^3$, 1.95 g/cm$^3$, 2.1 g/cm$^3$, 2.3 g/cm$^3$, 2.5 g/cm$^3$, or any value within a range defined by any two values thereof. In some embodiments, 1.65 g/cm$^3 \leq$PD$\leq$1.95 g/cm$^3$.

In some embodiments, an OI value of the carbon-based material is smaller than or equal to 18. The OI value of the carbon-based material indicates orientation index consistency of crystals in its particles. When the OI value is relatively large, the orientation index consistency of the crystals is high, and deintercalation and intercalation directions of lithium ions in active particles are relatively the same. This leads to difficulty in lithium deintercalation and intercalation, and even leads to lithium precipitation, thereby reducing the cycling performance of the secondary battery. In some embodiments, the OI value of the carbon-based material is 5 to 18, for example, 6, 7, 8, 9, 10, 11, 12, 13, 14, 15, 16, 17, or within a range defined by any two values thereof. In some embodiments, the orientation index OI value of the carbon-based material is 6 to 13.

In some embodiments, the carbon-based material includes graphite. In some embodiments, the graphite includes one or more selected from a group consisting of natural graphite and artificial graphite.

In some embodiments, a preparation method of the carbon-based material includes the following steps.

S1: Provide a graphite composite material.

S2: Mix the graphite composite material with an oxidant and then perform oxidation treatment to obtain an oxidized graphite composite material.

S3: Mix the oxidized graphite composite material with an oxygen-containing sodium salt to obtain the carbon-based material.

In some embodiments, in S2, the oxidant is a nitric acid (HNO$_3$) solution. In some embodiments, the concentration of the nitric acid solution is 2 mol/L to 5 mol/L, for example, 2.5 mol/L, 3 mol/L, 3.5 mol/L, 4 mol/L, or 4.5 mol/L.

In some embodiments, in S2, the temperature of oxidation treatment is 40°C to 80°C, for example, 45°C, 50°C, 55°C, 60°C, 65°C, 70°C, or 75°C. In some embodiments, in S2, the time of oxidation treatment is 1 h to 5 h, for example, 2 h, 3 h, or 4 h.

In some embodiments, in S3, the oxygen-containing sodium salt is selected from at least one of an inorganic sodium salt containing element oxygen or an organic sodium salt containing element oxygen. In some embodiments, the oxygen-containing sodium salt includes a carbon element. In some embodiments, the oxygen-containing sodium salt is selected from at least one of sodium carbonate, sodium bicarbonate, or sodium polyacrylate.

In some embodiments, based on the total weight of the oxidized graphite composite material and oxygen-containing sodium salt, the mass percentage of the sodium salt is 2% to 8%, for example, 3%, 4%, 5%, 6%, or 7%. In some embodiments, in S3, the time of mixing is 10 h to 24 h, for example, 12 h, 14 h, 16 h, 18 h, 20 h, or 22 h. In some embodiments, the mixing in S3 is ball milling mixing.

In some embodiments, providing the graphite composite material includes the following steps.

S11: Pulverize the graphite raw material, for example, until $D_v50$ is 9 $\mu$m to 11 $\mu$m.

S12: Perform pre-carbonization treatment on the pulverized raw material.

S13: Mix the pre-carbonized product with asphalt and perform granulation.

S14: Perform graphitization treatment on the granulated product to obtain the graphite composite material.

In some embodiments, in S11, the graphite raw material is selected from petroleum coke. In some embodiments, in S12, the temperature of pre-carbonization treatment is 800°C to 1200°C, for example, 850°C, 900°C, 950°C, 1000°C, 1050°C, 1100°C, or 1150°C.

In some embodiments, in S13, the amount of asphalt added is 5% to 15% of the mass of the graphite raw material, for example, 6%, 8%, 10%, 12%, or 14%. In some embodiments, in S13, the time of granulation is 2 h to 4 h, for example, 2.5 h, 3 h, or 3.5 h. In some embodiments, in S13, the temperature of granulation is 200°C to 500°C, for example, 250°C, 300°C, 350°C, 400°C, or 450°C.

In some embodiments, in S14, the temperature of graphitization treatment is 2600°C to 3100°C, for example, 2700°C, 2800°C, 2900°C, or 3000°C.

In some embodiments, a preparation method of the carbon-based material includes: pulverizing an artificial graphite raw material, performing pre-carbonization treatment on the pulverized raw material, adding asphalt for granulation after the treatment is completed, and performing high-temperature graphitization treatment after the granulation is completed to obtain a graphite composite material; and performing surface modification treatment (specifically including performing oxidation treatment first, and then mixing and performing ball milling treatment on the oxidized graphite composite material and the oxygen-containing sodium salt) on the graphite composite material to obtain the carbon-based material.

II. Secondary battery

A secondary battery provided in this application includes a negative electrode plate, and the negative electrode plate includes a negative electrode active material layer, where the negative electrode active material layer includes the negative electrode active material of the first aspect.

In some embodiments, a compacted density CD of the negative electrode plate satisfies 1.3 g/cm$^3$≤CD≤1.8 g/cm$^3$. The compacted density of the negative electrode plate affects energy density and kinetic performance of the secondary battery. When the compacted density of the negative electrode plate is excessively low, the energy density of the secondary battery is relatively low, and adhesion of negative electrode active material particles on a current collector becomes poor, which may cause detachment of the negative electrode active material, thereby reducing the cycling performance of the secondary battery. When the compacted density of the negative electrode plate is excessively high, infiltration of an electrolyte on the negative electrode plate obviously decreases, and the kinetic performance of the secondary battery is also reduced. In this case, lithium precipitation is likely to occur in the secondary battery during cycling, reducing its cycling performance. In some embodiments, CD is 1.35 g/cm$^3$, 1.4 g/cm$^3$, 1.45 g/cm$^3$, 1.5 g/cm$^3$, 1.55 g/cm$^3$, 1.6 g/cm$^3$, 1.65 g/cm$^3$, 1.7 g/cm$^3$, or 1.75 g/cm$^3$, or within a range defined by any two values thereof. In some embodiments, 1.45 g/cm$^3$≤CD≤1.75 g/cm$^3$.

In some embodiments, the OI value of the negative electrode plate is 5 to 20. The OI value of the negative electrode plate represents an arrangement orientation index of the negative electrode active material particles on the negative electrode plate. When the OI value of the negative electrode plate is excessively small, the negative electrode active material particles are arranged in disorder on a surface of the negative electrode current collector, and the orientation index is not obvious, which easily causes a situation such as the detachment of the negative electrode active material. When the OI value of the negative electrode plate is excessively large, the negative electrode active material particles are arranged in order on the negative electrode current collector, and the orientation index is high. However, this affects deintercalation and intercalation of lithium ions, thereby affecting the rate performance of the secondary battery. In some embodiments, the OI value of the negative electrode plate is 6, 7, 8, 9, 10, 11, 12, 13, 14, 15, 16, 17, 18, or 19, or within a range defined by any two values thereof. In some embodiments, the OI value of the negative electrode plate is 7 to 18.

In some embodiments, Id/Ig of the negative electrode plate satisfies 0.1≤Id/Ig≤0.6, where Id represents intensity of a peak at 1350 cm$^{-1}$ of the negative electrode plate in the Raman spectrum, and Ig represents intensity of a peak at 1580 cm$^{-1}$ of the negative electrode plate in the Raman spectrum. A value of Id/Ig indicates a defect level of the negative electrode plate. When Id/Ig is excessively large, the defect degree of the negative electrode plate is excessively high, which increases side reactions, affecting the cycling performance of the secondary battery. When Id/Ig is excessively small, the defect degree of the negative electrode plate is low, which is not conducive to the kinetic performance of the secondary battery. In some embodiments, Id/Ig is 0.15, 0.2, 0.25, 0.3, 0.35, 0.4, 0.45, 0.5, or 0.55, or within a range defined by any two values thereof. In some embodiments, 0.2≤Id/Ig≤0.5.

In some embodiments, a capacity retention rate of the secondary battery is ≥90% after 300 cycles at a high temperature of 45°C.

In some embodiments, the negative electrode plate further includes a negative electrode current collector, where the negative electrode current collector includes copper foil, aluminum foil, nickel foil, stainless steel foil, titanium foil, nickel foam, copper foam, a polymer substrate coated with conductive metal, or any combination thereof.

In some embodiments, the negative electrode active material layer further includes a binder and a conductive agent. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, polyvinylidene 1,1-difluoride, polyethylene, polypropylene, styrene-butadiene rubber, acrylic styrene-butadiene rubber, epoxy resin, nylon, or the like.

In some embodiments, the conductive agent includes, but is not limited to, a carbon-based material, a metal-based material, a conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, and the positive electrode includes a positive electrode current collector and a positive electrode active material layer, where the positive electrode active material layer includes a positive electrode active material, a binder, and a conductive agent.

According to some embodiments of this application, the positive electrode current collector may be a metal foil current collector or a composite current collector. For example, aluminum foil may be used. A composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material includes at least one of lithium cobalt oxide, lithium nickel cobalt manganate, lithium nickel manganese aluminate, lithium iron phosphate, lithium vanadium phosphate, lithium cobalt phosphate, lithium manganese phosphate, lithium manganese iron phosphate, lithium iron silicate, lithium vanadium silicate, lithium cobalt silicate, lithium manganese silicate, spinel-type lithium manganese oxide, spinel-type lithium nickel manganese oxide, or lithium titanate. In some embodiments, the binder includes a binder polymer, for example, at least one of polyvinylidene fluoride, polytetrafluoroethylene, polyolefin, sodium carboxymethyl cellulose, lithium carboxymethyl cellulose, modified polyvinylidene fluoride, modified SBR rubber, or polyurethane. In some embodiments, a polyolefin binder includes at least one of polyethylene, polypropylene, polyene ester, polyvinyl alcohol, or polyacrylic acid. In some embodiments, the conductive agent includes: a carbon-based material such as natural graphite, artificial graphite, carbon black, acetylene black, Ketjen black, or carbon fiber; a metal-based material such as metal powder or metal fiber of copper, nickel, aluminum, silver, or the like; a conductive polymer such as a polyphenylene derivative; or any mixture thereof.

The secondary battery of this application further includes a separator. The separator used in the secondary battery according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic substance layer, or may be a layer formed by a mixed polymer and an inorganic substance. The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylic ester, polyacrylic acid, polyacrylate, polyvinylpyrrolidone, polyethylene alkoxy, polymethyl methacrylate, polytetrafluoroethylene, or polyhexafluoropropylene. A polymer layer includes a polymer, and a material of the polymer is selected from at least one of polyamide, polyacrylonitrile, an acrylate polymer, polyacrylic acid, polyacrylate, polyvinylpyrrolidone, polyethylene alkoxy, polyvinylidene fluoride, or poly(vinylidene fluoride-hexafluoropropylene).

The secondary battery of this application further includes an electrolyte. An electrolyte that can be used in this application may be an electrolyte known in the prior art.

According to some embodiments of this application, the electrolyte includes an organic solvent, lithium salt, and an optional additive. The organic solvent in the electrolyte of this application may be any organic solvent known in the prior art that can be used as a solvent of the electrolyte. Electrolytic salt used in the electrolyte according to this application is not limited, and may be any electrolytic salt known in the prior art. The additive of the electrolyte according to this application may be any additive known in the prior art that can be used as an additive of the electrolyte. In some embodiments, the organic solvent includes, but is not limited to, ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or ethylene glycol dimethyl ether (DME). In some embodiments, the lithium salt includes at least one of an organic lithium salt or an inorganic lithium salt. In some embodiments, the lithium salt includes, but is not limited to, lithium hexafluorophosphate ($LiPF_6$), lithium tetrafluoroborate ($LiBF_4$), lithium difluorophosphate ($LiPO_2F_2$), bistrifluoromethanesulfonimide lithium salt $LiN(CF_3SO_2)_2$ (LiTFSI), lithium bis(fluorosulfonyl)imide $Li(N(SO_2F)_2)$ (LiFSI), lithium bis(oxalate)borate $LiB(C_2O_4)_2$ (LiBOB), or lithium difluoro(oxalato)borate $LiBF_2(C_2O_4)$ (LiDFOB). In some embodiments, the additive includes at least one of fluoroethylene carbonate or adiponitrile.

According to some embodiments of this application, the secondary battery of this application includes, but is not limited to, a lithium-ion battery or a sodium-ion battery. In some embodiments, the secondary battery includes a lithium-ion battery.

III. Electronic apparatus

This application further provides an electronic apparatus. The electronic apparatus includes the secondary battery of the second aspect of this application.

The electronic device or apparatus in this application is not particularly limited. In some embodiments, the electronic device in this application includes, but is not limited to, a notebook computer, a pen-input computer, a mobile computer, an electronic book player, a portable phone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power supply, a motor, an automobile, a motorcycle, an assisted bicycle, a bicycle, a lighting appliance, a toy, a game console, a clock, an electric tool, a flashlight, a camera, a large household battery, a lithium-ion capacitor, or the like.

In the following examples and comparative examples, all reagents, materials, and instruments used are commercially available, unless otherwise specified.

**Examples and comparative examples**

**Example 1**

Preparation of carbon-based material

Petroleum coke was selected as an artificial graphite raw material. The petroleum coke was first pulverized until $D_v50$ was 10.0 μm, and then pre-carbonization treatment was performed at 1000°C. After the treatment was completed, asphalt was added for granulation. The amount of asphalt added was 8% of the petroleum coke, the time of granulation was controlled to be 2 h, and the temperature of granulation was controlled to be 300°C. Characteristics such as a particle size and a powder compacted density were controlled by controlling the amount of asphalt added. After the granulation was completed, high-temperature graphitization treatment was performed, and the graphitization temperature was 2900°C. After the graphitization was completed, surface modification treatment was performed. The graphitized material was oxidized first, and nitric acid ($HNO_3$) solution with a concentration of 3 mol/L was selected as an oxidant. After oxidation treatment lasted for 3 h at 60°C, the material was washed using water and then dried. Then, the material and sodium polyacrylate were mixed and ball milled. The mass percentage of sodium polyacrylate in the mixture was 3%, and the ball milling time was 12 h. After the ball milling was completed, the mixture was sieved to obtain a carbon-based material.

Preparation of negative electrode plate

The foregoing carbon-based material was used as a negative electrode active material. The negative electrode active material, conductive carbon black, a binder styrene-butadiene rubber (SBR for short), and a thickener sodium carboxymethyl cellulose (CMC for short) were mixed at a mass ratio of 95.7:1.5:1.8:1 and thoroughly stirred in an appropriate amount of a deionized water solvent to obtain a uniform negative electrode slurry. The slurry was applied onto a current collector Cu foil, and then drying and cold pressing were performed to obtain a negative electrode plate.

Preparation of positive electrode plate

Lithium iron phosphate (chemical formula: $LiFePO_4$) was selected as a positive electrode active material of a positive electrode plate. The positive electrode active material, a conductive agent acetylene black, and a binder polyvinylidene fluoride (PVDF for short) were mixed at a mass ratio of 96.3:2.2:1.5 and thoroughly stirred in an appropriate amount of an N-methylpyrrolidone (NMP for short) solvent to obtain a uniform positive electrode slurry. The slurry was applied onto a current collector Al foil, and then drying and cold pressing were performed to obtain a positive electrode plate.

Preparation of electrolyte

In a dry argon atmosphere glove box, ethylene carbonate (EC), propylene carbonate (PC), ethyl methyl carbonate (EMC), and diethyl carbonate (DEC) were mixed at a mass ratio of EC:PC:EMC:DEC=1:3:3:3. Then, fluoroethylene carbonate and 1,3-propanesulfolactone were added and dissolved, and the mixture was thoroughly stirred. Then lithium salt $LiPF_6$ was added, and the foregoing substances were well mixed to obtain an electrolyte. A mass percentage of $LiPF_6$ was 12.5%, a mass percentage of fluoroethylene carbonate was 2%, and a mass percentage of 1,3-propanesulfolactone was 2%. The mass percentages of all the substances were obtained through calculation based on the mass of the electrolyte.

Preparation of lithium-ion battery

A PE porous polymer film was selected as a separator. The separator and the foregoing negative electrode plate and positive electrode plate were wound together and then placed in an aluminum-plastic film. After electrolyte injection, standing, and formation, a lithium-ion secondary battery was obtained.

**Examples 2 to 10 and Comparative Examples 1 and 2**

Examples 2 to 10 and Comparative Examples 1 and 2 were implemented by adjusting the mass ratio of sodium salt in the mixture and the ball milling time on the basis of Example 1. Table a shows the specific adjustment measures, and Table 1 shows the detailed data.

**Table a**

| Example and comparative example | Sodium salt mass percentage (%) | Ball milling time (h) |
|---|---|---|
| Example 2 | 2.0 | 10 |
| Example 3 | 2.7 | 24 |
| Example 4 | 3.5 | 14 |
| Example 5 | 4.3 | 12 |
| Example 6 | 4.9 | 18 |
| Example 7 | 5.6 | 15 |
| Example 8 | 6.6 | 17 |
| Example 9 | 7.2 | 13 |
| Example 10 | 8.0 | 11 |
| Comparative example 1 | 9.0 | 7 |
| Comparative example 2 | 3.0 | 6 |

**Examples 11 to 18**

Examples 11 to 18 were implemented by adjusting the amount of asphalt added and the concentration of the nitric acid on the basis of Example 6. Table b shows the specific adjustment measures, and Table 2 shows the detailed data.

**Table b**

| Example | Amount of asphalt added (%) | Nitric acid concentration (mol/L) |
|---|---|---|
| Example 11 | 5.0 | 2.0 |
| Example 12 | 10.0 | 4.0 |
| Example 13 | 12.5 | 5.0 |
| Example 14 | 15.0 | 3.5 |
| Example 15 | 5.0 | 1.5 |
| Example 16 | 6.0 | 6.0 |
| Example 17 | 4.5 | 4.0 |
| Example 18 | 16.3 | 5.0 |

**Examples 19 to 24**

Examples 19 to 24 were implemented by adjusting the mass ratio of the sodium salt in the mixture, the concentration of the nitric acid, and the particle size for raw material pulverization on the basis of Example 14. Table c shows the specific adjustment measures, and Table 3 shows the detailed data.

**Table c**

| Example | Sodium salt mass percentage (%) | Nitric acid concentration (mol/L) | Particle size $D_v50$ for petroleum coke pulverization (μm) |
|---|---|---|---|
| Example 19 | 4.9 | 3.5 | 10.0 |
| Example 20 | 5.0 | 3.8 | 9.5 |
| Example 21 | 6.1 | 3.7 | 11.5 |
| Example 22 | 6.5 | 4.1 | 9.0 |
| Example 23 | 7.3 | 3.0 | 8.6 |
| Example 24 | 2.8 | 3.3 | 9.2 |

**Examples 25 to 30**

Examples 25 to 30 were implemented by adjusting the particle size for raw material pulverization, the amount of asphalt added, and the ball milling time on the basis of Example 20. Table 4 shows the details.

**Examples 31 to 42**

In Examples 31 to 42, the compacted density CD, OI value, and Id/Ig of the negative electrode plate were further designed and optimized on the basis of Example 30. Table 5 shows the details.

**Test methods**

**1. Particle size test**

The particle size test method was based on GB/T 19077-2016. Specific processes were as follows: 1 g of a sample was weighed and well mixed with 20 ml of deionized water and a small amount of dispersant, and the mixture was placed in ultrasonic equipment for performing ultrasonic treatment for 5 min, then the solution was poured into the sample injection system Hydro 2000SM for testing. The testing equipment used was Mastersizer 3000 produced by Malvern. During the test, a laser beam passed through the dispersed particle sample, where the particle size was measured by measuring intensity of scattered light. Then, the data was used to analyze and calculate the particle size distribution forming the scattering spectrogram. The refractive index of the particles under testing was 1.8, and one sample was tested three times. The particle size was the average value of the three tests.

## 2. Powder compacted density test

The standard of the powder compacted density test was based on GB/T 24533-2009 "Graphite Negative Electrode Materials for Lithium-Ion Batteries". Specific test method was as follows:
1.0000±0.0500 g of a carbon-based material sample was weighed and placed in a testing mold (CARVER#3619 (13 mm), and then the sample was placed in testing equipment. The testing equipment was UTM7305 of Suns with the test tonnage of 0.3 t, 0.5 t, 0.75 t, 1.0 t, 1.5 t, 2.0 t, 2.5 t, 3.0 t, 4.0 t, and 5.0 t, pressure rise velocity of 10 mm/min, pressure rise retention time of 30s, pressure relief velocity of 30 mm/min, and pressure relief retention time of 10s.
In this application, a powder compacted density is a compacted density measured after being pressed at 5t pressure. Formula for calculating compacted density: Compacted density=material mass/(material stressed area×sample thickness).

## 3. Raman test for negative electrode plate

A 100 $\mu$m×100 $\mu$m area on a negative electrode plate was selected. Particles within the area were scanned using a laser microscopic confocal Raman spectrometer (Raman, HR Evolution, HORIBA Scientific) to obtain peaks d and peaks g of all particles in the area range. Data was processed using LabSpec software to obtain peak intensities of the peak d and peak g of each particle, which were Id and Ig, respectively. Frequency of Id/Ig was counted with a step of 0.02 to obtain a normal distribution graph. (Id/Ig)max and (Id/Ig)min of these particles were counted, and the average value of Id/Ig was calculated to obtain the Id/Ig value of the negative electrode plate. A laser wavelength of the Raman spectrometer could be within the range of 532 nm to 785 nm.
Peak d generally appears near 1350 cm$^{-1}$ and is caused by a symmetric stretching vibration radial breathing mode of sp$^2$ carbon atoms in an aromatic ring (structural defect).
Peak g appears near 1580 cm$^{-1}$, is caused by tensile vibration between sp$^2$ carbon atoms, and corresponds to vibration (in-plane vibration of carbon atoms) of $E_{2g}$ optical phonon at the center of Brillouin zone.

## 4. OI value test

A diffraction line pattern of a (004) plane and a diffraction line pattern of a (110) plane in the X-ray diffraction pattern of a negative electrode plate or carbon-based material were tested according to the mechanical industry standard JB/T 4220-2011 "Method for Determining Lattice Parameters of Artificial Graphite" of the People's Republic of China. Test conditions are as follows: CuK$\alpha$ radiation was used for X-ray, and CuK$\alpha$ radiation was removed by a filter or a monochromator. The working voltage of an X-ray tube was (30-35) kV, and the working current was (15-20) mA. The scanning speed of a counter was 1/4(°)/min. When the 004 diffraction line pattern was recorded, the scanning range of a diffraction angle 2θ was 53° to 57°. When the 110 diffraction line pattern was recorded, the scanning range of a diffraction angle 2θ was 75° to 79°. The peak area obtained from the diffraction line pattern of the (004) plane was recorded as C004. The peak area obtained from the diffraction line pattern of the (110) plane was recorded as C110. The ratio of C004/C110 of the negative electrode plate or carbon-based material was calculated, which was the OI value of the negative electrode plate or carbon-based material.

## 5. Specific surface area

The specific surface area test method was based on GB/T 19587-2017. Specific processes were as follows: 1 to 8 g of a sample (the sample should exceed at least 1/3 of the volume of the sphere) was weighed and placed in a 1/2 inch long tube with a bulb (the diameter of the sphere part was 12 mm). After subjected to pretreatment at 200°C for 2 h, the sample was placed in the testing equipment TriStar3030 (Micromeritics Instrument Corp, the United States of America) for testing. N2 (which had a purity of 99.999%) was used as the adsorption gas, and the test was conducted under the condition of 77K. The specific surface area was measured using the BET calculation method.

## 6. Mass loss ratio of carbon-based material

A thermogravimetric analyzer was used to test the carbon-based material. Specifically, a sample was placed into an aluminum crucible. Before and after the sample was placed into the aluminum crucible, it was weighed on a balance to obtain the sample mass m1. After the sample was placed, a crucible cover and the crucible were pressed together on a special tablet press to prevent the sample from being ejected from the crucible by thermal decomposition airflow or thermal decomposition burst during a heating process to cause non-thermal-decomposition weight loss in the experiment. Nitrogen protection atmosphere was injected, the sample was heated to 400°C, and the temperature was kept for 10 min. After cooling, the mass m2 of the remaining sample was measured. The mass loss ratio of the carbon-based material could be obtained using the formula (m1-m2)/m1×100%.

### 7. Element percentage and mass percentage of carbon-based material

Testing standard of a method for testing an element percentage and a mass percentage of a carbon-based material was GB/T 17359-2012, and quantitative analysis was performed based on an energy dispersive spectrum. Testing processes were as follows: Under the requirements of a standard experimental environment and testing standard, the carbon-based material was placed into a sample chamber of a scanning electron microscope according to the standard operating processes. Magnified observation was performed on the tested position with an accelerating voltage of 15 kV, and qualitative and quantitative analyses were performed on the sample using an X-ray energy dispersive spectrometer. Then, a plane region was selected for scanning and analysis, and the size of the selected region was 100 $\mu$m×100 $\mu$m.

### 8. Cycling performance test

Temperature was 45°C.

1. The battery was charged at a direct current (DC) of 0.5C to 2.5 V (not the first discharge).
2. The battery was left standing for 10 min.
3. The battery was charged at a constant current (CC) of 0.5C to 3.6 V, and then discharged at a constant voltage (CV) to 0.05C.
4. The battery was left standing for 10 min.
5. The battery was charged at a DC of 0.5C to 2.5 V.
6. Steps 2 to 5 were repeated for 300 times.
7. Capacity retention rate after 300 cycles=electric quantity discharged at the 300th cycle/electric quantity discharged at the first cycle×100%.

### Test results

Table 1 shows influence on the cycling performance of the lithium-ion battery by the atomic percentage X of the element sodium and the atomic percentage Y of the element oxygen on the surface of the carbon-based material. X and Y can be changed by adjusting the mass percentage of the sodium salt in the mixture and the ball milling time.

**Table 1**

| Example and comparative example | X | Y | Y/X | Capacity retention rate after 300 cycles at 45°C (%) |
|---|---|---|---|---|
| Example 1 | 0.31% | 4.5% | 14.5 | 92.2 |
| Example 2 | 0.2% | 2.5% | 12.5 | 92.1 |
| Example 3 | 0.5% | 7.5% | 15.0 | 92.2 |
| Example 4 | 1.3% | 4.8% | 3.7 | 92.5 |
| Example 5 | 1.8% | 5.9% | 3.3 | 92.6 |
| Example 6 | 2.1% | 10.7% | 5.1 | 93.2 |
| Example 7 | 2.6% | 9.2% | 3.5 | 92.5 |
| Example 8 | 2.9% | 12.5% | 4.3 | 92.2 |
| Example 9 | 3.3% | 13.7% | 4.2 | 92.0 |
| Example 10 | 4.0% | 15.0% | 3.8 | 91.9 |
| Comparative example 1 | 2.6% | 6.5% | 2.5 | 82.4 |
| Comparative example 2 | 1.2% | 3.5% | 2.9 | 83.8 |

It can be learned from data in Table 1 that when the atomic percentage X of the element sodium and the atomic percentage Y of the element oxygen on the surface of carbon-based particle satisfy Y/X≥3.0, the lithium-ion battery can have excellent cycling performance.

Table 2 shows influence on the performance of the lithium-ion battery by the value of the specific surface area BET of the carbon-based material and the mass percentage m of the element sodium on the basis of Example 6. The ratio of BET to the mass percentage of the element sodium of the carbon-based material can be adjusted by adjusting the amount of asphalt added and the concentration of the nitric acid.

**Table 2**

| Example | X | Y | Y/X | BET (m²/g) | BET/(Y×100) | m | Capacity retention rate after 300 cycles at 45°C (%) |
|---|---|---|---|---|---|---|---|
| Example 6 | 2.1% | 10.7% | 5.1 | 7.0 | 0.7 | 8.1% | 93.2 |
| Example 11 | 0.8% | 8.5% | 10.6 | 2.5 | 0.3 | 3.3% | 94.5 |
| Example 12 | 2.4% | 12.5% | 5.2 | 7.5 | 0.6 | 6.2% | 94.4 |
| Example 13 | 2.5% | 14.6% | 5.8 | 4.8 | 0.3 | 7.8% | 94.5 |
| Example 14 | 2.0% | 11.3% | 5.7 | 5.9 | 0.5 | 5.5% | 95.0 |
| Example 15 | 0.7% | 2.5% | 3.6 | 1.2 | 0.5 | 0.4% | 93.8 |
| Example 16 | 1.3% | 6.8% | 5.2 | 4.8 | 0.7 | 6.2% | 93.9 |
| Example 17 | 1.1% | 11.5% | 10.5 | 7.5 | 0.7 | 6.2% | 94.1 |
| Example 18 | 2.6% | 13.2% | 5.1 | 4.8 | 0.4 | 8.8% | 94.3 |

It can be learned from data in Table 2 that when the carbon-based material satisfy BET/(Y×100)≤0.7 and 0.4%≤m≤9%, the cycling performance of the lithium-ion battery is further improved on the basis of Example 6.

Table 3 shows influence on the performance of the lithium-ion battery by the particle size distribution and the mass loss ratio when heated at 400°C of the carbon-based material on the basis of Example 14. $D_v99$, $D_v10$, and the mass loss ratio when heated at 400°C of the carbon-based material can be changed by adjusting the mass percentage of the sodium salt, the concentration of the nitric acid, and the particle size for pulverization.

**Table 3**

| Example | X | Y | Y/X | Mass loss ratio (%) | $D_v99$ (μm) | $D_v10$ (μm) | $D_v99$-$D_v10$ (μm) | Capacity retention rate after 300 cycles at 45°C (%) |
|---|---|---|---|---|---|---|---|---|
| Example 14 | 2.0% | 11.3% | 5.7 | 0.4 | 36.0 | 7.3 | 28.7 | 95.0 |
| Example 19 | 2.2% | 11.8% | 5.4 | 0.5 | 37.0 | 1.3 | 35.7 | 96.1 |
| Example 20 | 2.5% | 12.5% | 5.0 | 0.9 | 39.0 | 3.5 | 35.5 | 95.8 |
| Example 21 | 2.9% | 13.7% | 4.7 | 1.4 | 33.5 | 6.9 | 26.6 | 95.3 |
| Example 22 | 3.3% | 14.5% | 4.4 | 2.5 | 30.0 | 5.3 | 24.7 | 95.4 |
| Example 23 | 1.5% | 10.5% | 7.0 | 0.2 | 33.6 | 2.5 | 31.1 | 95.6 |
| Example 24 | 2.1% | 11.0% | 5.2 | 0.4 | 45.0 | 4.5 | 40.5 | 95.5 |

It can be learned from data in Table 3 that when the carbon-based material satisfies at least one condition of the mass loss ratio when heated at 400°C being 0.2% to 5% or $25≤D_v99-D_v10≤55$, the cycling capacity retention rate of the lithium-ion battery is improved. When both the conditions are satisfied, the cycling capacity retention rate of the lithium-ion battery is obviously improved.

Table 4 shows influence on the performance of the lithium-ion battery by the powder compacted density PD in g/cm³, and the OI value of the carbon-based material on the basis of Example 20.

**Table 4**

| Example | PD (g/cm³) | OI value | Capacity retention rate (%) |
|---|---|---|---|
| Example 20 | 1.63 | 14.0 | 95.8 |
| Example 25 | 1.56 | 7.0 | 96.2 |
| Example 26 | 1.63 | 8.2 | 96.3 |

(continued)

| Example | PD (g/cm$^3$) | OI value | Capacity retention rate (%) |
|---|---|---|---|
| Example 27 | 1.69 | 13.6 | 96.4 |
| Example 28 | 1.85 | 16.5 | 96.3 |
| Example 29 | 1.75 | 5.5 | 96.8 |
| Example 30 | 1.89 | 8.5 | 96.9 |

It can be learned from data in Table 4 that compared with Example 20, when the carbon-based material satisfies at least one condition of 1.5 g/cm$^3$≤PD≤2.5 g/cm$^3$ or the OI value being 5 to 18, the capacity retention rate of the lithium-ion battery is improved. When both the conditions are satisfied, the capacity retention rate of the lithium-ion battery is obviously improved.

Table 5 shows influence on the performance of the lithium-ion battery by the compacted density CD in g/cm$^3$, the OI value, and Id/Ig of the negative electrode plate on the basis of Example 30.

**Table 5**

| Example | CD (g/cm$^3$) | OI value | Id/Ig | Capacity retention rate (%) |
|---|---|---|---|---|
| Example 30 | 1.77 | 19.2 | 0.55 | 96.9 |
| Example 31 | 1.50 | 6.5 | 0.10 | 97.1 |
| Example 32 | 1.65 | 6.8 | 0.15 | 97.3 |
| Example 33 | 1.78 | 16.5 | 0.53 | 97.2 |
| Example 34 | 1.80 | 17.8 | 0.59 | 97.3 |
| Example 35 | 1.35 | 5.0 | 0.25 | 97.3 |
| Example 36 | 1.40 | 5.5 | 0.33 | 97.2 |
| Example 37 | 1.55 | 7.4 | 0.13 | 97.5 |
| Example 38 | 1.70 | 9.8 | 0.17 | 97.6 |
| Example 39 | 1.35 | 11.2 | 0.32 | 97.7 |
| Example 40 | 1.79 | 12.6 | 0.45 | 97.6 |
| Example 41 | 1.55 | 10.2 | 0.26 | 98.0 |
| Example 42 | 1.68 | 14.6 | 0.40 | 97.9 |

It can be learned from data in Table 5 that compared with Example 30, when the negative electrode plate satisfies one or two conditions of 1.3 g/cm$^3$≤CD≤1.8 g/cm$^3$, the OI value being 5 to 20, and 0.1≤Id/Ig≤0.6, the capacity retention rate of the lithium-ion battery is improved. When all the conditions are satisfied, the capacity retention rate of the lithium-ion battery is obviously improved.

Although illustrative embodiments have been demonstrated and described, persons skilled in the art should understand that the foregoing embodiments cannot be construed as limitations on this application, and that some embodiments may be changed, replaced, and modified without departing from the spirit, principle, and scope of this application.

**Claims**

1. A negative electrode active material, comprising a carbon-based material, wherein a surface of the carbon-based material comprises element sodium and element oxygen, an atomic percentage of the element sodium being X, an atomic percentage of the element oxygen being Y, and Y/X≥3.0, wherein X and Y are tested through an X-ray energy dispersive spectrometer.

2. The negative electrode active material according to claim 1, wherein 0.2%≤X≤4.0%; and/or 2.0%≤Y≤15.0%.

3. The negative electrode active material according to claim 1, wherein $3.5 \leq Y/X \leq 15$.

4. The negative electrode active material according to claim 1, wherein $0.3\% \leq X \leq 2.5\%$; and/or $3.0\% \leq Y \leq 12.0\%$.

5. The negative electrode active material according to claim 1, wherein the carbon-based material satisfies $BET/(Y \times 100) \leq 0.7$, wherein BET $m^2/g$ representing a specific surface area of the carbon-based material; and/or a mass percentage of the element sodium is m, and $0.4\% \leq m \leq 9\%$.

6. The negative electrode active material according to claim 5, wherein $0.2 \leq BET/(Y \times 100) \leq 0.6$; and/or $3\% \leq m \leq 6\%$.

7. The negative electrode active material according to claim 1, wherein the carbon-based material satisfies at least one of the following conditions (i) to (iv):

   (i) $25 \leq D_v99 - D_v10 \leq 55$, wherein $D_v99$ represents a particle size when a cumulative volume percentage of the carbon-based material in a volume-based particle size distribution reaches 99%, expressed in $\mu m$; and $D_v10$ represents a particle size when the cumulative volume percentage of the carbon-based material in the volume-based particle size distribution reaches 10%, expressed in $\mu m$;
   (ii) a weight loss rate of the carbon-based material is 0.2% to 5% within a temperature range of 25°C to 400°C in a thermogravimetry test;
   (iii) a powder compacted density PD at 5t of the carbon-based material satisfies $1.5\ g/cm^3 \leq PD \leq 2.5\ g/cm^3$; or
   (iv) an OI value of the carbon-based material is 5 to 18.

8. The negative electrode active material according to claim 7, wherein the carbon-based material satisfies at least one of the following conditions (v) to (viii):

   (v)

   $$30 \leq D_v99 - D_v10 \leq 40;$$

   (vi) the weight loss rate of the carbon-based material is 0.5% to 2.5% within the temperature range of 25°C to 400°C in the thermogravimetry test;
   (vii)

   $$1.65\ g/cm^3 \leq PD \leq 1.95\ g/cm^3;$$

   or
   (viii) an orientation index OI value of the carbon-based material is 6 to 13.

9. The negative electrode active material according to claim 1, wherein the carbon-based material comprises graphite.

10. A secondary battery, comprising a negative electrode plate; the negative electrode plate comprising a negative electrode active material layer; wherein the negative electrode active material layer comprises the negative electrode active material according to any one of claims 1 to 9.

11. The secondary battery according to claim 10, wherein the negative electrode plate satisfies at least one of the following conditions (ix) to (xi):

    (ix) a compacted density CD of the negative electrode plate satisfies $1.3\ g/cm^3 \leq CD \leq 1.8\ g/cm^3$;
    (x) an OI value of the negative electrode plate is 5 to 20; or
    (xi) Id/Ig of the negative electrode plate satisfies $0.1 \leq Id/Ig \leq 0.6$, wherein Id represents an intensity of a peak at 1350 $cm^{-1}$ of the negative electrode plate in a Raman spectrum; and Ig represents an intensity of a peak at 1580 $cm^{-1}$ of the negative electrode plate in the Raman spectrum.

12. The secondary battery according to claim 11, wherein the negative electrode plate satisfies at least one of the following conditions (xii) to (xiv):

    (xii)

$$1.45 \text{ g/cm}^3 \leq CD \leq 1.75 \text{ g/cm}^3;$$

(xiii) the OI value of the negative electrode plate is 7 to 18; or
(xiv) $0.2 \leq \text{Id/Ig} \leq 0.5$.

13. An electronic apparatus, comprising the secondary battery according to any one of claims 10 to 12.

FIG. 1

## INTERNATIONAL SEARCH REPORT

| International application No. |
| --- |
| **PCT/CN2023/078734** |

### A. CLASSIFICATION OF SUBJECT MATTER

H01M4/587(2010.01)i; H01M10/0525(2010.01)i; C01B32/20(2017.01)i

According to International Patent Classification (IPC) or to both national classification and IPC

### B. FIELDS SEARCHED

Minimum documentation searched (classification system followed by classification symbols)

IPC: H01M、C01B

Documentation searched other than minimum documentation to the extent that such documents are included in the fields searched

Electronic data base consulted during the international search (name of data base and, where practicable, search terms used)

CNABS: CNTXT; VEN; WOTXT; USTXT; EPTXT; CNKI: 负极, 碳, 石墨, 钠, 氧, 原子, 元素, negative electrode, carbon, graphite, sodium, oxygen, atom, element

### C. DOCUMENTS CONSIDERED TO BE RELEVANT

| Category* | Citation of document, with indication, where appropriate, of the relevant passages | Relevant to claim No. |
| --- | --- | --- |
| X | CN 106925270 A (CHINA PETROCHEMICAL CO., LTD. et al.) 07 July 2017 (2017-07-07) description, paragraphs 2-4 and 8-128 | 1-13 |
| X | CN 106925317 A (CHINA PETROCHEMICAL CO., LTD. et al.) 07 July 2017 (2017-07-07) description, paragraphs 2-4 and 8-134 | 1-13 |
| X | US 6759169 B1 (HITACHI POWDERED METALS CO., LTD.) 06 July 2004 (2004-07-06) description, column 2, line 22 to column 11, line 4 | 1-13 |
| A | WO 2021108996 A1 (NINGDE CONTEMPORARY AMPEREX TECHNOLOGY CO., LTD.) 10 June 2021 (2021-06-10) entire document | 1-13 |
| A | CN 115461889 A (SEMICONDUCTOR ENERGY LABORATORY CO., LTD.) 09 December 2022 (2022-12-09) entire document | 1-13 |

☐ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **28 October 2023** | **14 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| International application No. |
|---|
| **PCT/CN2023/078734** |

| Patent document cited in search report | | | Publication date (day/month/year) | Patent family member(s) | | | Publication date (day/month/year) |
|---|---|---|---|---|---|---|---|
| CN | 106925270 | A | 07 July 2017 | CN | 106925270 | B | 23 July 2019 |
| CN | 106925317 | A | 07 July 2017 | CN | 106925317 | B | 19 July 2019 |
| US | 6759169 | B1 | 06 July 2004 | WO | 9901904 | A1 | 14 January 1999 |
| | | | | JP | 4187076 | B2 | 26 November 2008 |
| | | | | KR | 20000068455 | A | 25 November 2000 |
| | | | | KR | 100345802 | B1 | 24 July 2002 |
| | | | | CH | 693053 | A5 | 31 January 2003 |
| | | | | JP | WO1999001904 | A1 | 07 December 1999 |
| WO | 2021108996 | A1 | 10 June 2021 | KR | 20220064385 | A | 18 May 2022 |
| | | | | JP | 2022550944 | A | 06 December 2022 |
| | | | | US | 2022002160 | A1 | 06 January 2022 |
| | | | | EP | 3913708 | A1 | 24 November 2021 |
| | | | | CN | 114245942 | A | 25 March 2022 |
| | | | | IN | 202217030957 | A | 03 June 2022 |
| CN | 115461889 | A | 09 December 2022 | KR | 20230006856 | A | 11 January 2023 |
| | | | | JPWO | 2021220111 | A1 | 04 November 2021 |
| | | | | WO | 2021220111 | A1 | 04 November 2021 |
| | | | | US | 2023216051 | A1 | 06 July 2023 |

Form PCT/ISA/210 (patent family annex) (July 2022)